# EUROPÄISCHE PATENTSCHRIFT

(11) **EP 0 568 079 B1**
(45) Veröffentlichungstag und Bekanntmachung des Hinweises auf die Patenterteilung: **11.09.1996**
(21) Anmeldenummer: 93107001.5
(22) Anmeldetag: 29.04.1993
(51) Int. Cl.: B60B 37/08, B61F 5/38, B61F 3/16

(54) **Zweiachsiges Laufwerk für Schienenfahrzeuge**
Running gear with two axles for railway vehicles
Train de roulement à deux essieux pour véhicules ferroviaires

(30) Priorität: 29.04.1992 DE 4213956
(43) Veröffentlichungstag der Anmeldung: 03.11.1993
(73) Patentinhaber: ABB Daimler-Benz Transportation (Deutschland) GmbH, 16761 Hennigsdorf (DE)
(72) Erfinder: Hachmann, Ulrich, Dr., W-8501 Pyrbaum (DE); Lang, Hans-Peter, W-8856 Harburg (DE); Richter, Wolfgang-Dieter, W-8501 Winkelhaid (DE)

(56) Entgegenhaltungen:
- EP-A- 0 188 687
- CH-A- 657 327
- DE-C- 3 538 779
- REVUE GENERALE DES CHEMINS DE FER Nr. 5, 1981, PARIS Seiten 315 - 316 'Bogie ferroviaire avec roues indépendantes en rotation' SEITE 315 : FIGUR RECHTS UNTEN

## Beschreibung

Die Erfindung betrifft ein zweiachsiges Laufwerk für Schienenfahrzeuge mit den Merkmalen des Oberbegriffs des Anspruchs 1.

Bei bekannten zweiachsigen Laufwerken dieser Art (EP-A-0 188 687, DE-C-35 38 779) befindet sich zwischen den Achshälften jedes Radsatzes je ein Lager, das die zugehörigen Räder derart entkoppelt, daß sie unabhängig voneinander drehbar sind. Im Bereich des Lagers befindet sich außerdem eine steuerbare Kupplung, mittels welcher die Achshälften zumindest weitgehend starr kuppelbar sind. Diese Kupplung dient dazu, beim Lauf des betreffenden Radsatzes längs eines Gleises die zugehörigen Räder voneinander partiell entkoppeln zu können, wenn insbesondere bei Kurvenfahrt eine Differenzdrehzahl an den Rädern eines Radsatzes auftritt. Sind Radsätze starr gekuppelt, sorgt der systembedingte Sinuslauf für einen gleichförmigen symmetrischen Verschleiß der Laufflächen, ist aber gleichzeitig Ursache instabiler Laufzustände bei höherer Geschwindigkeit. Im Gegensatz dazu weisen Laufwerke mit Losradsätzen keine systemtypische Grenzgeschwindigkeit auf. Von Nachteil ist jedoch die von der Rad-Schiene-Profilpaarung abhängige, nur durch die Schwerkraft bewirkte Zentrierung des Laufwerks im Gleis und die von der konstruktiven Ausführung der Radlagerung beeinflußte Neigung zu assymetrischem Verschleiß der Laufflächen.

Der Erfindung liegt die Aufgabe zugrunde, bei einem zweiachsigen Laufwerk gemäß dem Oberbegriff des ersten Anspruchs Steuerungsmaßnahmen zu treffen, durch welche unabhängig von der Betriebsrichtung des Schienenfahrzeugs die Grenzgeschwindigkeit eines Laufwerks deutlich angehoben werden kann, ohne auf den Verschleißausgleich des Sinuslaufs verzichten zu müssen.

Die Lösung dieser Aufgabe erfolgt gemäß der Erfindung durch die kennzeichnenden Merkmale des ersten Anspruchs. Fortbildungen und besondere Ausführungen der Erfindung sind von den weiteren Ansprüchen umfaßt.

Bei einer Ausgestaltung eines zweiachsigen Laufwerks gemäß der Erfindung werden die Achshälften der beiden Radsätze eines Laufwerks jeweils so gesteuert, daß der vorlaufende Radsatz starr und der nachlaufende Radsatz mit unabhängig drehbaren Rädern läuft.

Dem vorzugsweise als Wälzlager ausgebildeten Lager kann ein Sperrelement zugeordnet sein, das es je nach Drehrichtung sperrt oder freigibt. Das Sperrelement kann dabei entweder passiv in Abhängigkeit von der dem System zugeführten Energie oder aktiv in Abhängigkeit wählbarer Regelgrößen arbeiten.

Nach einer Ausführung der Erfindung ist das Sperrelement eine aktivierbare Kupplung, wie eine Magnetpulverkupplung, eine elektromagnetische Reibungskupplung oder eine hydraulische Kupplung, wobei es mit Mitteln zur Erkennung der Drehrichtung der Achshälften und einer Steuerung ausgestattet ist, die es entsprechend der Drehrichtung aktiviert oder freischaltet.

Nach einer zweiten Ausführung der Erfindung besteht das Sperrelement aus wenigstens einer Fliehkraftkupplung mit wenigstens einem Freilauf, wobei die Achshälften in der einen Drehrichtung durch die Fliehkraftkupplung kraftschlüssig verbunden sind und in der anderen Drehrichtung durch den Freilauf unabhängig voneinander drehen.

Vorteilhafterweise kann das Sperrelement oder seine Regelcharakteristik so ausgeführt werden, daß es bei einer höheren, definierbaren Drehzahl außer Funktion gesetzt wird, damit bei hoher Geschwindigkeit alle Räder des Laufwerks unabhängig voneinander drehen.

Im Folgenden wird die Erfindung anhand von Zeichnungen beispielhaft näher beschrieben. Dabei zeigen:
- Fig. 1): einen Radsatz eines Laufwerks mit Wälzlagern und Magnetpulverkupplung;
- Fig. 2): die Verbindung von zwei Achshälften mit Wälzlager und Fliehkraftkupplung.

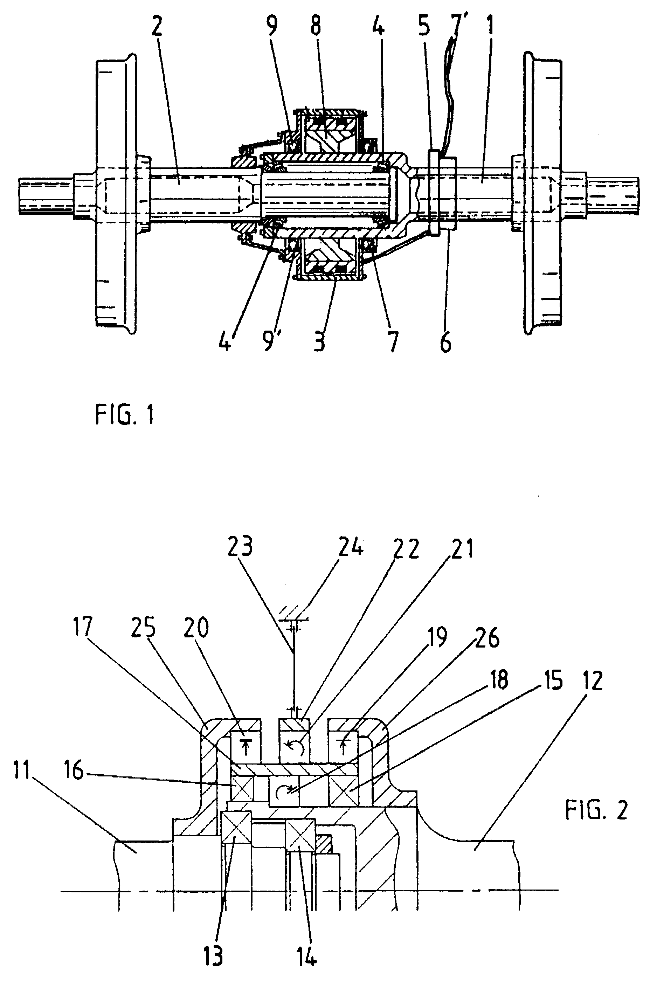

Der Radsatz gemäß Fig. 1 besteht aus zwei Achshälften, wobei die eine Hälfte als Steckachse 2 und die andere Hälfte als Hohlachse 1 ausgebildet ist. Steckachse 2 und Hohlachse 1 sind ineinander über Wälzlager 4 gelagert. Die Steckachse 2 ist mit einem Gehäuse 9 fest verbunden, das sich in Richtung auf die Verbindung der Hohlachse 1 erstreckt und dort eine Magnetpulverkupplung 8 umschließt, die mit der Hohlachse 1 an ihrem äußeren Umfang fest verbunden ist. Das Gehäuse 9 ist auf dem äußeren Umfang der Hohlachse 1 durch Kugellager 9' frei drehbar gelagert, wobei durch Aktivierung der Magnetpulverkupplung 8 eine kraftschlüssige Verbindung zwischen dem Gehäuse 9 und damit der Steckachse 2 und der Hohlachse 1 hergestellt wird. Die Hohlachse 1 ist mit einem Drehrichtungssensor 6 und einer Steuerung 5 versehen. Je nach Drehrichtung aktiviert die Steuerung 5 die Magnetpulverkupplung 8, oder schaltet sie frei. Hierfür ist die Steuerung mit den erforderlichen Verbindungskabeln 7, 7' versehen.

In Fig. 2 sind zwei Achshälften, eine Steckachse 11 und eine Hohlachse 12 über ein Kegelrollenlagerpaar 13 und 14 drehbar miteinander verbunden. Zwei Wälzlager 15 und 16 auf der Hohlachse 12 tragen ein rohrförmiges Zwischenstück 17, das um die Achshälften in deren Steckbereich angeordnet ist. Beide Achshälften sind mit flanschartigen, konzentrischen Gehäusehälften 25, 26 versehen, die das Zwischenstück 17 teilweise umschließen, jedoch einen Abstand zueinander aufweisen. In einer Drehrichtung wird das Zwischenstück 17 über einen Freilauf 18 von der Hohlachse 12 angetrieben. Über zwei Fliehkraftkupplungen 19 und 20, die zwischen dem Zwischenstück 17 und jeweils einer Gehäusehälfte 25, 26 angeordnet sind, werden in dieser Drehrichtung die beiden Achshälften 11, 12 kraftschlüssig miteinander verbunden. In der entgegengesetzten Drehrichtung verhindert ein weiterer Freilauf 21, der zwischen den Gehäusehälften 25, 26 auf dem Zwischenstück angeordnet ist und über einen äußeren Ring 22 und eine Drehmomentstütze 23 mit dem Laufwerksrahmen 24 verbunden ist, das Mitdrehen des Zwischenstücks 17 und die beiden Achshälften drehen unabhängig voneinander.

## Patentansprüche

1. Zweiachsiges Laufwerk für Schienenfahrzeuge, bei dem die Radsätze mit unabhängig voneinander drehbaren, jedoch miteinander kuppelbaren Rädern ausgerüstet sind und eine Entkopplung der Räder durch ein zentral zwischen zwei Achshälften (1, 2, 11, 12) angeordnetes Lager (4, 13, 14) erfolgt,
**dadurch gekennzeichnet,**
daß der in Fahrtrichtung führende Radsatz mit gesperrtem und der nachlaufende Radsatz mit freigegebenem Lager (4, 13, 14) läuft.

2. Zweiachsiges Laufwerk nach Anspruch 1,
**dadurch gekennzeichnet**,
daß dem Wälzlager (4, 13, 14) ein Sperrelement zugeordnet ist, das je nach Drehrichtung das Wälzlager (4, 13, 14) sperrt oder freigibt.

3. Zweiachsiges Laufwerk nach Anspruch 2,
**dadurch gekennzeichnet**,
daß das Sperrelement passiv in Abhängigkeit von der dem System zugeführten Energie oder aktiv in Abhängigkeit wählbarer Regelgrößen arbeitet.

4. Zweiachsiges Laufwerk nach Anspruch 3,
**dadurch gekennzeichnet**,
daß das Sperrelement eine aktivierbare Kupplung, wie eine Magnetpulverkupplung (8), eine elektromagnetische Reibungskupplung oder eine hydraulische Kupplung ist, wobei das Sperrelement mit Mitteln zur Erkennung der Drehrichtung der Achshälften und einer Steuerung ausgestattet ist, die es entsprechend der Drehrichtung
aktiviert oder freischaltet.

5. Zweiachsiges Laufwerk nach Anspruch 3,
**dadurch gekennzeichnet**,
daß das Sperrelement aus wenigstens einer Fliehkraftkupplung (19, 20) mit wenigstens einem Freilauf (18, 21) besteht,
wobei die Achshälften (11, 12) in der einen Drehrichtung durch die Fliehkraftkupplung (19, 20) kraftschlüssig verbunden sind und in der anderen Drehrichtung durch den Freilauf unabhängig voneinander drehen.

6. Zweiachsiges Laufwerk nach einem der Ansprüche 3 bis 5,
**dadurch gekennzeichnet**,
daß das Sperrelement oder seine Regelcharakteristik so ausgeführt ist,
daß es bei einer höheren, definierbaren Drehzahl außer Funktion gesetzt wird.

## Claims

1. A two-axle running gear for railway vehicles, in which the wheelsets are equipped with wheels which are rotatable independently of one another but may be coupled together, and disengagement of the wheels is effected by means of a bearing (4, 13, 14) disposed centrally between two axle halves (1, 2, 11, 12),
characterized in that the leading wheelset, in the direction of travel, runs with the bearing (4, 13, 14) locked and the following wheelset runs with it released.

2. A two-axle running gear according to claim 1, characterized in that a locking element is associated with the roller bearing (4, 13, 14), which locks or releases the roller bearing (4, 13, 14) depending on the direction of rotation.

3. A two-axle running gear according to claim 2, characterized in that the locking element operates passively in dependence on the energy supplied to the system or actively in dependence on selectable controlled variables.

4. A two-axle running gear according to claim 3, characterized in that the locking element is an activatable clutch, such as a magnetic-particle clutch (8), an electromagnetic friction clutch or a hydraulic clutch, the locking element being provided with means to detect the direction of rotation of the axle halves and a control which activates or disconnects it according to the direction of rotation.

5. A two-axle running gear according to claim 3, characterized in that the locking element consists of at least one centrifugal clutch (19, 20) with at least one free-wheel (18, 21), the axle halves (11, 12) being force-coupled by means of the centrifugal clutch (19, 20) in one direction of rotation and rotating independently of one another by means of the free-wheel in the other direction of rotation.

6. A two-axle running gear according to one of claims 3 to 5, characterized in that the locking element or its control characteristic is designed in such a way that at a higher, definable speed it is rendered inoperative.

## Revendications

1. Organe de roulement à deux essieux pour véhicules ferroviaires, dans lequel les essieux montés sont équipés de roues pouvant tourner indépendamment l'une de l'autre, mais accouplables l'une à l'autre, et un désaccouplement des roues a lieu à l'aide d'un palier (4, 13, 14) disposé en position centrale entre deux moitiés d'essieu (1, 2, 11, 12), caractérisé en ce que l'essieu avant dans le sens de la marche est en fonction quand le palier (4, 13, 14) est bloqué, et que l'essieu arrière est en marche quand le palier (4, 13, 14) est dégagé.

2. Organe de roulement à deux essieux selon la revendication 1, caractérisé en ce qu'au roulement (4, 13, 14) est attribué un élément de blocage, qui, selon le sens de rotation des roulements (4, 13, 14), a un effet de blocage ou de dégagement.

3. Organe de roulement à deux essieux selon la revendication 2, caractérisé en ce que l'élément de blocage travaille d'une manière passive en fonction de l'énergie amenée au système, ou d'une manière active en fonction de variables commandées pouvant être sélectionnées.

4. Organe de roulement à deux essieux selon la revendication 3, caractérisé en ce que l'élément de blocage est un accouplement activable, tel qu'un accouplement à particules magnétiques (8), un accouplement à friction électromagnétique ou un accouplement hydraulique, l'élément de blocage étant équipé de moyens pour reconnaître le sens de rotation des moitiés d'axe, ainsi que d'un système de commande qui, selon le sens de rotation, l'active ou le déconnecte.

5. Organe de roulement à deux essieux selon la revendication 3, caractérisé en ce que l'élément de blocage est constitué d'au moins un accouplement centrifuge (19, 20) comportant au moins une roue libre (18, 21), où les moitiés d'essieu (11, 12) sont, dans l'un des sens de rotation, liées par une liaison dynamique sous l'effet de l'accouplement centrifuge (19, 20), et, dans l'autre sens de rotation, tournent indépendamment l'une de l'autre grâce à la roue libre.

6. Organe de roulement à deux essieux selon l'une des revendications 3 à 5, caractérisé en ce que l'élément de blocage ou sa caractéristique de réglage est conçu de façon à être mis hors service pour une vitesse de rotation plus grande, parfaitement définissable.
